# FASCICULE DE BREVET EUROPEEN

(11) **EP 1 503 616 B1**
(45) Date de publication et mention de la délivrance du brevet: **23.07.2008**
(21) Numéro de dépôt: 04291539.7
(22) Date de dépôt: 17.06.2004
(51) Int. Cl.: H05K 5/02

(54) **Dispositif pour la connexion d'équipements électroniques sur un réceptacle unique standardisé**
Vorrichtung zum Anschliessen elektronischer Einrichtungen an einen einzigen standardisierten Stecker
Device for connecting electronic equipments to a single standardized receptacle

(30) Priorité: 28.07.2003 FR 0309241
(43) Date de publication de la demande: 02.02.2005
(73) Titulaire: EADS Test & Services, 75016 Paris (FR)
(72) Inventeur: Ginestet-Cros, Bernard, 31700 Beauzelle (FR)
(74) Mandataire: de Saint-Palais, Arnaud Marie

(56) Documents cités:
- US-A- 5 515 239
- US-A- 5 664 118
- US-A- 6 079 620

## Description

La présente invention concerne un dispositif pour la connexion d'équipements électroniques équipés de connecteurs pouvant présenter diverses géométries, sur un réceptacle unique standardisé.

Elle s'applique notamment, mais non exclusivement, au téléchargement de logiciels opérationnels sur un grand nombre d'équipements différents.

D'une façon générale, les problèmes posés par ce type de connexion sont liés à la diversité des équipements devant être connectés, à la fiabilité de l'atelier de téléchargement et à sa disponibilité dans le temps.

Le document US-A-5 664 118 décrit une station d'accueil pour un ordinateur portable qui facilite une connexion rapide entre l'ordinateur portable et des autres équipements diverses, ainsi qu'un ordinateur de bureau.

Ainsi, pour satisfaire aux exigences requises dans la plupart des applications concernées et, en particulier, dans celles précédemment évoquées, il faut pouvoir :
- effectuer une conversion entre le connecteur de l'équipement à télécharger et le réceptacle standardisé,
- permettre un nombre de cycles de connexion/déconnexion compatible avec la durée de vie de la connectique des équipements,
- reconfigurer rapidement le réceptacle standardisé pour recevoir un équipement quelconque,
- permettre, le cas échéant, une modification rapide du câblage au niveau du connecteur destiné à recevoir l'équipement sans immobiliser l'atelier de téléchargement.

L'invention a donc plus particulièrement pour but de résoudre ces problèmes et de parvenir à ces résultats.

A cet effet, elle propose un dispositif de connexion faisant intervenir, d'une part, un atelier comportant au moins une platine porte-équipements munie d'au moins un réceptacle comportant dans sa partie inférieure des premiers moyens de connexion et, d'autre part, au moins une cassette conformée de manière à pouvoir partiellement s'engager dans ledit réceptacle, cette cassette comprenant des deuxièmes moyens de connexion aptes à venir s'accoupler avec les premiers moyens de connexion lorsque la cassette est engagée à l'intérieur du réceptacle et des troisièmes moyens de connexion sur lesquels peuvent se connecter des moyens de connexion d'un connecteur particulier, ces troisièmes moyens de connexion étant disposés dans une partie de la cassette située en dehors de la partie qui s'engage dans ledit réceptacle, des moyens de conversion étant prévus au niveau du circuit électrique reliant le deuxième au troisième connecteur.

Avantageusement, l'atelier pourra comprendre plusieurs réceptacles identiques qui peuvent être dédiés par une cassette appropriée qui réalise la conversion entre le connecteur de l'équipement et le réceptacle.

Un mode d'exécution de l'invention sera décrit ci-après, à titre d'exemple non limitatif, avec référence aux dessins annexés dans lesquels :
La figure 1 est une vue en perspective d'un atelier mono-équipement ;
La figure 2 est une représentation schématique, en perspective, permettant d'illustrer le principe de mise en place ou d'extraction d'une cassette ;
La figure 3 est un schéma synoptique du dispositif selon l'invention ;
La figure 4 est une vue en perspective partielle, à plus grande échelle, d'un atelier du type de celui représenté figure 1.

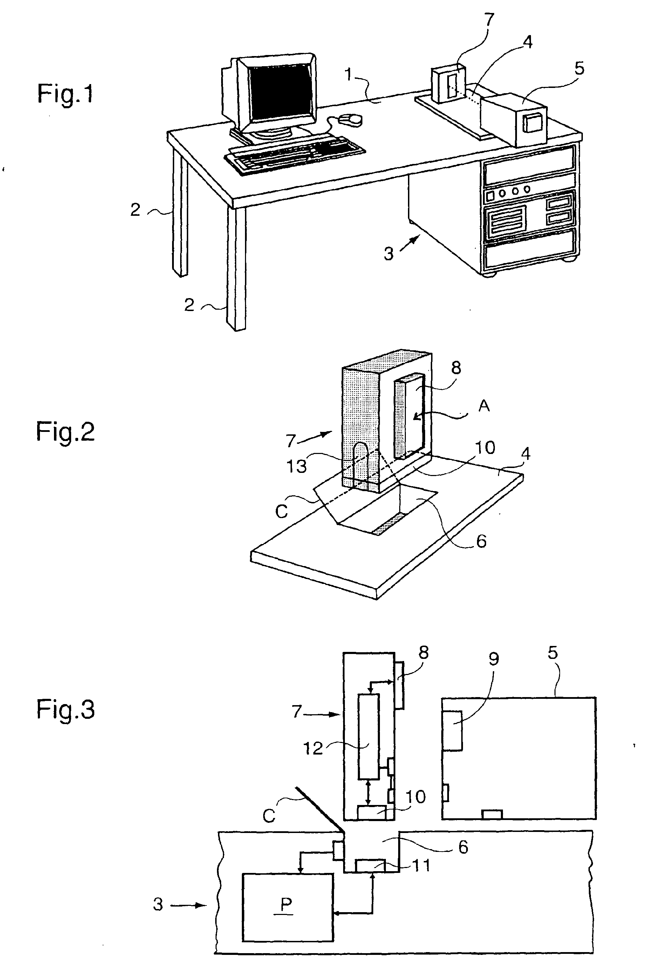

Dans l'exemple illustré sur la figure 1, l'atelier présente la forme d'un poste de travail classique comprenant un plateau de table 1 supporté, d'un côté, par un piètement 2 et, de l'autre côté, par un module technique 3 renfermant un processeur P ainsi que des circuits électroniques spécifiques à l'atelier.

Le plateau 1 comprend une aire de travail sur laquelle peut être disposé un ensemble clavier/écran source ainsi qu'une platine porte-équipements 4 destinée à recevoir des équipements 5 dans lesquels on souhaite effectuer le téléchargement de logiciels opérationnels.

Conformément à l'invention, cette platine 4 comprend, à l'une de ses extrémités (de préférence l'extrémité postérieure), un réceptacle 6 destiné à recevoir une cassette 7 servant à assurer la connexion de l'équipement 5 aux circuits électroniques du module technique 3 et à effectuer une conversion et/ou une adaptation tenant compte de la nature de l'équipement 5 que l'on veut connecter.

Dans cet exemple, la cassette 7, de forme parallélépipédique, comprend un premier connecteur 8 placé sur l'une de ses faces principales de manière à pouvoir se connecter sur un connecteur correspondant 9 de l'équipement, posé sur la platine 4, lorsque la cassette 7 est engagée dans le réceptacle 6. Elle comprend un second connecteur 10 placé sur sa face latérale inférieure de manière à venir se connecter en fin de course d'introduction avec un connecteur 11 situé dans le fond du réceptacle 6, ce connecteur 11 étant lui-même relié au circuit électronique du module technique 3.

La liaison entre les deux connecteurs 8, 10 de la cassette 7 est assurée au moyen d'un circuit de conversion 12 approprié à l'équipement 5.

Avantageusement, la cassette pourra comprendre des moyens de guidage 13 coopérant avec des moyens de guidage correspondants prévus dans le réceptacle 6 pour permettre à la cassette de s'introduire dans le réceptacle par glissement doux sans nécessiter d'outillage, la reconfiguration de l'emplacement étant donc assurée.

En outre, le réceptacle pourra être équipé d'un couvercle basculant C de manière à pouvoir être refermé en dehors de ses périodes d'utilisation et permettre ainsi l'usage de la totalité de la surface du plateau.

Avantageusement, les connecteurs 10 et 11 seront conçus de manière à permettre d'effectuer un nombre de cycles de connexion/déconnexion égal à au moins dix fois celui des couples de connecteurs 8 et 9. Ainsi, la cassette 7 peut être considérée comme une pièce d'usure qui peut être échangée en fin de vie de la connexion A avant intervention sur la platine porte-équipements.

Ce dispositif permet donc de pallier le problème de durée de vie de la connectique de l'équipement qui est d'environ 500 manoeuvres.

Bien entendu, il conviendra de prévoir autant de cassettes que de type d'équipements de manière à pouvoir assurer toutes les conversions nécessaires.

Par ailleurs, grâce aux dispositions précédemment décrites, des équipements matériellement identiques peuvent être affectés à des fonctions différentes par rebouclage des broches des connecteurs 8, 9. Ces liaisons étant faites à l'intérieur de la cassette 7, les évolutions sont donc aisées puisque ne nécessitant pas d'intervention sur la platine porte-équipements 4. De ce fait, les évolutions de câblage éventuelles ne sont pas susceptibles d'immobiliser l'atelier.

Toutes les cassettes 7 sont identifiables par le calculateur qui contrôle l'atelier de téléchargement au moyen d'un bus circulant sur les réceptacles 6. Cela permet de vérifier la cohérence entre l'opération demandée par l'opérateur et les types d'équipements placés sur le plateau.

Bien entendu, l'invention ne se limite pas au mode d'exécution précédemment décrit.

Ainsi, notamment, le plateau de l'atelier pourrait comprendre plusieurs platines porte-équipements comportant chacune un réceptacle.

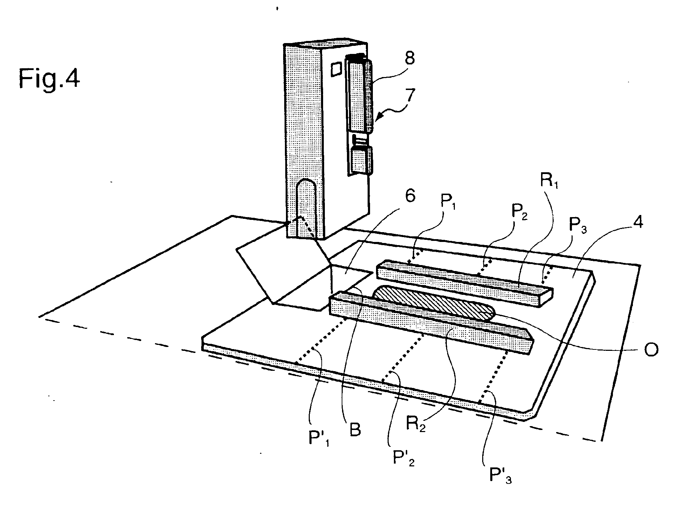

De même, comme illustré sur la figure 4, la platine 4 pourra comprendre deux rails de guidage parallèles, à écartement réglable, axés perpendiculairement au bord antérieur B du réceptacle 6 (qui correspond à la face antérieure de la casette 7 portant le connecteur 8).

Dans cet exemple, la fixation des rails R₁, R₂ sur la platine 4 avec réglage de l'écartement est obtenue au moyen de broches prévues sur la face inférieure des rails R₁, R₂ qui viennent s'engager dans des perçages correspondants prévus dans la platine 4. Chaque rail R₁, R₂ possède ici trois broches qui s'engagent dans trois perçages de trois séries de perçages P₁, P₂, P₃ - P'₁, P'₂, P'₃ disposées sur trois axes respectifs parallèles au bord antérieur B du réceptacle 6, à un écartement égal à celui des broches.

Par ailleurs, la platine 4 pourra comprendre dans une zone centrale située en regard du bord antérieur B du réceptacle 6, un orifice de ventilation O de forme oblongue sensiblement axé sur l'axe de symétrie dudit bord B. Cet orifice de ventilation O qui est connecté au circuit de ventilation du module technique 3 sert à assurer la ventilation de l'équipement 5 qui se trouve placé sur la platine à l'état connecté sur la cassette 7.

Avantageusement, la platine 4 est munie d'un système d'adaptation mécanique, manuel ou automatique permettant de configurer le guidage et la ventilation en fonction de la nature de l'équipement et/ou du processeur P équipant le module technique 3.

## Revendications

1. Dispositif pour la connexion d'équipements électroniques variés au circuit électronique d'un atelier comportant au moins une aire de support de l'équipement (4),
**caractérisé en ce qu'**il comprend, d'une part, au moins un réceptacle standardisé (6) réalisé dans l'aire de support ou à son voisinage, ce réceptacle (6) comportant des premiers moyens de connexion (11) raccordés audit circuit électronique et, d'autre part, au moins une cassette (7) par type d'équipement différent (5) conformée de manière à pouvoir partiellement s'engager dans ledit réceptacle (6), cette cassette comprenant des deuxièmes moyens de connexion (10) aptes à venir s'accoupler avec les premiers moyens de connexion (11) lorsque la cassette est engagée à l'intérieur du réceptacle (6), et des troisièmes moyens de connexion (8) sur lesquels peuvent se connecter des quatrièmes moyens de connexion (9) d'un équipement (5) disposé sur ladite aire de support, des moyens de conversion (12) reliant les deuxièmes moyens de connexion (11) aux troisièmes moyens de connexion (8), à l'intérieur de la cassette (7), pour effectuer une conversion entre le connecteur de l'équipement (5) à télécharger et le réceptacle standardisé (6) tenant compte de la nature de l'équipement (5) que l'on veut connecter, les susdits troisièmes moyens de connexion (8) étant situés dans une partie de la cassette (7) située en dehors du réceptacle alors que la cassette (7) s'engage dans ledit réceptacle (6).

2. Dispositif selon la revendication 1,
**caractérisé en ce que** la cassette (7) comprend des moyens de guidage (13) coopérant avec des moyens de guidage correspondants prévus dans le réceptacle (6).

3. Dispositif selon l'une des revendications précédentes,
**caractérisé en ce qu'**il comprend un couvercle (C) servant à refermer le réceptacle (6) en dehors de ses périodes d'utilisation.

4. Dispositif selon l'une des revendications précédentes,
**caractérisé en ce que** les susdits premiers et seconds moyens de connexion (10, 11) sont conçus de manière à effectuer un nombre de cycles de connexion/déconnexion égal à au moins dix fois celui des susdits troisièmes et quatrièmes moyens de connexion (8, 9).

5. Dispositif selon l'une des revendications précédentes,
**caractérisé en ce que** la susdite aire de support (4) comprend des moyens de guidage (R₁, R₂) des équipements (5).

6. Dispositif selon la revendication 5,
**caractérisé en ce que** les susdits moyens de guidage comprennent deux rails (R₁, R₂) à écartement réglable, axés perpendiculairement au bord antérieur (B) du réceptacle (6).

7. Dispositif selon l'une des revendications précédentes,
**caractérisé en ce que** la susdite aire de support (4) comprend un orifice de ventilation destiné à assurer la ventilation de l'équipement (5) qui s'y trouve disposé.

8. Dispositif selon la revendication 5,
**caractérisé en ce que** la susdite aire de support (4) est munie d'un système d'adaptation mécanique, manuel ou automatique, permettant de configurer le guidage et la ventilation en fonction de la nature de l'équipement (5) et/ou du processeur (P).

## Claims

1. Device to connect various electronic equipment to the electronic circuit of a workshop, comprising at least one equipment support zone (4), **characterised in that** it comprises at least one standard receptacle (6) in the support zone or close to it, wherein this receptacle (6) comprises first connection means (11) connected to said electronic circuit, and at least one cassette (7) for each type of different equipment (5), formed so that it can be partially engaged into said receptacle (6), wherein this cassette comprises second connection means (10) capable of coupling with the first connection means (11) when the cassette is inserted inside the receptacle (6), and third connection means (8) to which may be connected fourth connection means (9) of a piece of equipment (5) located in said support zone, wherein conversion means (12) connect the second connection means (11) to the third connection means (8) inside the cassette (7), to make a conversion between the connector of the equipment (5) to be downloaded and the standard receptacle (6), taking into account the type of equipment (5) that is to be connected, wherein said third connection means (8) are located in a part of the cassette (7) situated outside of the receptacle when the cassette (7) is engaged into said receptacle (6).

2. Device of claim 1, **characterised in that** the cassette (7) has guide means (13) which engage and work with corresponding guide means in the receptacle (6).

3. Device of any of the previous claims, **characterised in that** it comprises a cover (C) which is used to seal the receptacle (6) when it is not in use.

4. Device of any of the previous claims, **characterised in that** said above-mentioned first and second connection means (10, 11) are designed so that they carry out a number of connection - disconnection cycles equal to at least ten times that of said third and fourth connection means (8, 9).

5. Device of any of the previous claims, **characterised in that** said support zone (4) comprises means (R₁, R₂) for guiding the pieces of equipment (5).

6. Device of claim 5, **characterised in that** said above-mentioned guide means comprise two rails (R₁, R₂) for which the distance between them can be adjusted, on a perpendicular axis to the front edge (B) of the receptacle (6).

7. Device of any of the previous claims, **characterised in that** said support zone (4) comprises a ventilation orifice designed to ventilate the equipment (5) that is located in it.

8. Device of claim 5, **characterised in that** said support zone (4) is equipped with a mechanical, manual or automatic adaptor system, permitting the guiding and ventilation to be configured to suit the nature of the equipment (5) and/or the processor (P).

## Patentansprüche

1. Vorrichtung zum Anschließen verschiedener elektronischer Einrichtungen an eine Elektronikschaltung eines Arbeitsplatzes, welcher mindestens einen Einrichtungsträgerbereich (4) aufweist,
**dadurch gekennzeichnet, dass** sie einerseits mindestens ein standardisiertes, in den Trägerbereich oder seiner Nachbarschaft implementiertes Fach (6) aufweist, wobei dieses Fach (6) erste Anschlussmittel (11) umfasst, die an die Elektronikschaltung angeschlossen sind, und andererseits mindestens eine Kassette (7) eines anderen Einrichtungstyps (5) aufweist, die derart entsprechend ausgestaltet ist, dass sie in das Fach (6) teilweise einsteckbar ist, wobei diese Kassette zweite Anschlussmittel (10), die geeignet sind, in Verbindung mit den ersten Anschlussmitteln (11) zu kommen, wenn die Kassette in das Innere des Fachs (6) eingesteckt ist, und dritte Anschlussmittel (8) aufweist, an die sich vierte Anschlussmittel (9) einer Einrichtung (5) anschließen können, die auf dem Trägerbereich angeordnet ist, wobei Umwandlungsmittel (12) im Inneren der Kassette (7) die zweiten Anschlussmittel (11) mit den dritten Anschlussmitteln (8) verbinden, um eine Umwandlung zwischen dem Anschlussstecker der fernzubeladenden Einrichtung (5) und dem standardisierten Fach (6) zu verwirklichen, wobei die Art der Einrichtung (5), die man anschließen will, berücksichtigt wird, wobei sich die dritten Anschlussmittel (8) in einem Teil der Kassette (7) befinden, der sich außerhalb des Fachs befindet, während die Kassette (7) in das Fach (6) eingesteckt ist.

2. Vorrichtung nach Anspruch 1,
**dadurch gekennzeichnet, dass** die Kassette (7) Führungsmittel (13) aufweist, die mit korrespondierenden, in dem Fach (6) vorgesehenen Führungsmitteln zusammenwirken.

3. Vorrichtung nach einem der vorhergehenden Ansprüche,
**dadurch gekennzeichnet, dass** sie einen Deckel (C) aufweist, der zum Verschließen des Fachs (6) außerhalb seiner Benutzungszeiten dient.

4. Vorrichtung nach einem der vorhergehenden Ansprüche,
**dadurch gekennzeichnet, dass** die ersten und zweiten Anschlussmittel (10, 11) derart konzipiert sind, dass eine Anzahl von Verbindungs-/Trenn-Zyklen verwirklicht ist, die mindestens dem Zehnfachen derjenigen der dritten und vierten Anschlussmittel (8, 9) entspricht.

5. Vorrichtung nach einem der vorhergehenden Ansprüche,
**dadurch gekennzeichnet, dass** der Trägerbereich (4) Führungsmittel (R₁, R₂) der Einrichtungen (5) aufweist.

6. Vorrichtung nach Anspruch 5, **dadurch gekennzeichnet,**
**dass** die Führungsmittel zwei Schienen (R₁, R₂) mit einstellbarem Abstand umfassen, die senkrecht zum vorderen Rand (B) des Fachs (6) ausgerichtet sind.

7. Vorrichtung nach einem der vorhergehenden Ansprüche, **dadurch gekennzeichnet, dass** der Trägerbereich (4) eine Belüftungsöffnung aufweist, die zum Gewährleisten einer Belüftung der Einrichtung (5) bestimmt ist, die dort befindlich angeordnet ist,.

8. Vorrichtung nach Anspruch 5, **dadurch gekennzeichnet,**
**dass** der Trägerbereich (4) mit einem mechanischen, manuellen oder automatischen Adaptersystem ausgestattet ist, welches es ermöglicht, die Führung und die Belüftung entsprechend der Art der Einrichtung (5) und/oder des Prozessors (P) zu konfigurieren.
